Europäisches Patentamt

European Patent Office

Office européen des brevets

(11) Veröffentlichungsnummer: **0 541 885 B1**

## (12) EUROPÄISCHE PATENTSCHRIFT

(45) Veröffentlichungstag der Patentschrift: **30.08.95**

(21) Anmeldenummer: **92100576.5**

(22) Anmeldetag: **15.01.92**

(51) Int. Cl.⁶: **G01B 3/10**

(54) **Elektronischer Teleskopmessstab.**

(30) Priorität: **11.11.91 DE 9114056 U**

(43) Veröffentlichungstag der Anmeldung:
**19.05.93 Patentblatt 93/20**

(45) Bekanntmachung des Hinweises auf die
Patenterteilung:
**30.08.95 Patentblatt 95/35**

(84) Benannte Vertragsstaaten:
**DE FR GB IT NL**

(56) Entgegenhaltungen:
**FR-A- 2 410 251**
**FR-A- 2 506 928**

**PATENT ABSTRACTS OF JAPAN vol. 10, no.
284 (P-501)26. September 1986& JP-A-61 104
213 (SEKISUI JUSHI CO LTD) 22. Mai 1986**

(73) Patentinhaber: **Nestle & Fischer GmbH & Co.
KG
Hochgerichtsstrasse 39
D-7295 Dornstetten (DE)**

(72) Erfinder: **Felkel, Hans
Schlagwaldstrasse 31
W-7298 Lossburg (DE)**

(74) Vertreter: **Ott, Elmar, Dipl.-Ing. et al
Ott . Klocke . Neubauer
Patentanwälte,
Kappelstrasse 8
D-72160 Horb 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen elektronischen Teleskopmeßstab gemäß der Gattung des Anspruchs 1.

Es sind Teleskopmeßstäbe bekannt, die aus einem langgestreckten Grundgehäuse bestehen, an dem an einer Seite ein stabförmiges Verlängerungsteil ausziehbar ist. Um beispielsweise die lichte Weite einer Öffnung in einer Wand zu messen, wird der Teleskopmeßstab zwischen den Öffnungsrändern so weit ausgezogen, bis er beidseitig an den Öffnungsrändern anliegt. An einer elektronischen Anzeige kann dann der Abstand der Öffnungsränder abgelesen werden.

Zur Bestimmung des Abstandes beinhaltet ein solcher Teleskopmeßstab eine Meßelektronik, in der die Grundlänge des nicht ausgezogenen Teleskopmeßstabes abgelegt ist. Außerdem sind Sensoren vorgesehen, mit denen die Wegstrecke gemessen wird, um die das Verlängerungteil aus dem Grundgehäuse herausgezogen ist. Zur Bestimmung dieser Wegstrecke kann ein am Verlängerungsband befestigtes Lochband verwendet werden, welches an einer Lichtschranke vorbeigeführt ist. Beim Ausziehen des Verlängerungsteils passieren die Löcher des Lochbandes die Lichtschranke, woraus die Meßelektronik die Anzahl der an der Lichtschranke vorbeigeführten Löcher bestimmen kann. Der Lochabstand des Lochbandes bandes ist bekannt, so daß die Meßelektronik daraus die zurückgelegte Wegstrecke des Verlängerungsteils bestimmen kann. Die Auflösung bzw. die Meßgenauigkeit einer solchen Meßanordnung mit Lochband hängt vom Lochabstand ab. Beträgt der Lochabstand beispielsweise 4 mm - Lochlänge 2 mm und Breite des zwischen den Löchern befindlichen Steges 2 mm - so ergibt sich daraus eine Auflösung von 2 mm.

Aus FR-A-2 410 251 ist ein Meßband bekannt, das eine Skala aus reflektierenden und nichtreflektierenden Abschnitten trägt, die mit mindestens einer optischen Sensorvorrichtung ausgelesen wird. Eine Sensorvorrichtung besteht aus zwei optischen Fasern, die nebeneinander angeordnet sind und von denen die eine mit einer Lichtquelle, die andere mit einem Photodetektor verbunden ist. Wenn die Sensorvorrichtung über einem reflektierenden Abschnitt der Skala steht, wird Licht aus der Lichtquelle via Meßband auf den Photodetektor reflektiert. In einem Ausführungsbeispiel sind mehrere Sensorvorrichtungen so angeordnet, daß sie wie ein Nonius funktionieren.

Der Erfindung liegt die Aufgabe zugrunde, einen elektronischen Teleskopmeßstab zu schaffen, der eine höhere Auflösung hat.

Die Lösung dieser Aufgabe wird bei einem elektronischen Teleskopmeßstab der eingangs genannten Gattung durch die im kennzeichnenden Teil des Anspruchs 1 angegebenen Merkmale erhalten. Erfindungsgemäß wird dem mit dem Verlängerungsteil verbundenen Lochband eine Nonius-Schlitzblende überlagert, die beispielsweise 10, 20 oder 50 Schlitze umfassen kann. Jedem Schlitz dieser Schlitzblende ist ein Fotodetektor zugeordnet, so daß bei Übereinstimmung eines Schlitzes mit einem Loch des Lochbandes ein diese Übereinstimmung kennzeichnendes Fotodetektorsignal erzeugt wird. Auf diese Weise läßt sich sehr einfach ermitteln, wie viele Schlitze mit den Löchern des darunter befindlichen Bandes übereinstimmen, d. h. welche Schlitze nicht von den zwischen den Löchern des Lochbandes befindlichen Stegen zugedeckt sind. Aus der Anzahl der "freien" Schlitze kann eine Meßwertpräzisierung vorgenommen werden. Bei einer Nonius-Schlitzblende mit 20 Schlitzen erhält man eine um den Faktor 20 höhere Auflösung gegenüber einer Meßanordnung mit Lochband ohne Nonius-Schlitzblende. Bei 10 Schlitzen erhöht sich die Auflösung um den Faktor 10.

Die Fotodetektoren und lichtemittierenden Elemente sind vorzugsweise in zwei Bauteilehaltern in Reihe angeordnet. Die Bauteilehalter dienen dabei gleichzeitig als Fixierteil für die Nonius-Schlitzblende und als Führung für das Lochband. Beide Bauteilehalter können aus Kunststoff kostengünstig und mit der erforderlichen Genauigkeit hergestellt werden. Die Ausbildung des Führungskanals in Form eines Schwalbenschwanzprofils hat sich dabei als vorteilhaft erwiesen.

Die exakte Ausrichtung der beiden übereinander angeordneten Bauteilehalter erfolgt mittels daran vorgesehener Positionierungselemente.

Die Erfindung wird nachfolgend anhand eines in der Zeichnung dargestellten Ausführungsbeispiels näher erläutert.

Es Zeigen:

Figur 1 die Seitenansicht eines elektronischen Teleskopmeßstabes,

Figur 2 die Draufsicht des Teleskopmeßstabes gemäß Figur 1,

Figur 3 die Anordnung einer Lichtschranke an einem Lochband in der Seitenansicht und in der Draufsicht,

Figur 4 eine vergrößerte Darstellung eines Details von Figur 3 in der Draufsicht,

Figur 5 die prinzipielle Anordnung von Lochband und Nonius-Schlitzblende in der Draufsicht,

Figur 6 einen vergrößerten Ausschnitt aus der Nonius-Schlitzblende gmäß Figur 5,

Figur 7 bis Figur 9 drei unterschiedliche relative Positionen des Lochbandes in Bezug auf die Nonius-Schlitzblende,

Figur 10 ein Blockschaltbild der elektronischen Meßeinrichtung,

Figur 11 eine Wertetabellle für die im ROM von Figur 10 abgelegten Werte,

Figur 12 die Einrichtung 8 gemäß Figur 1 im Querschnitt und

Figur 13 und Figur 14 Einzelheiten der Figur 12 in der Draufsicht.

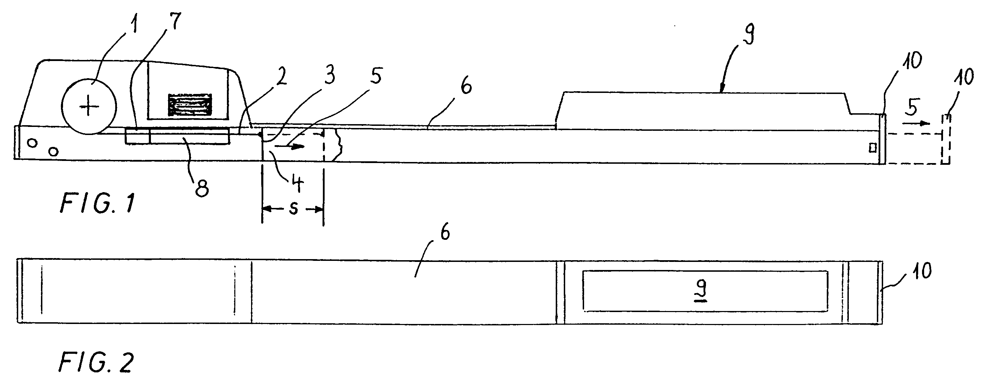

Der in Figur 1 dargestellte elektronische Teleskopmeßstab besitzt eine Aufwickelmechanik 1 für ein Lochband 2, das am Ende 3 eines im Teleskopmeßstab verlaufenden Verlängerungsteil 4 befestigt ist. Das verlängerungsteil 4 läßt sich in Pfeilrichtung 5 aus dem Grundgehäuse 6 herausziehen und beispielsweise in eine Position bringen, die mit unterbrochenen Linien in der Zeichnung dargestellt ist. Dabei wird das Lochband 2 von der Aufwickelmechanik 1 um eine entsprechende Wegstrecke s abgezogen. Der Teleskopmeßstab ist damit um die Wegstrecke s verlängert worden.

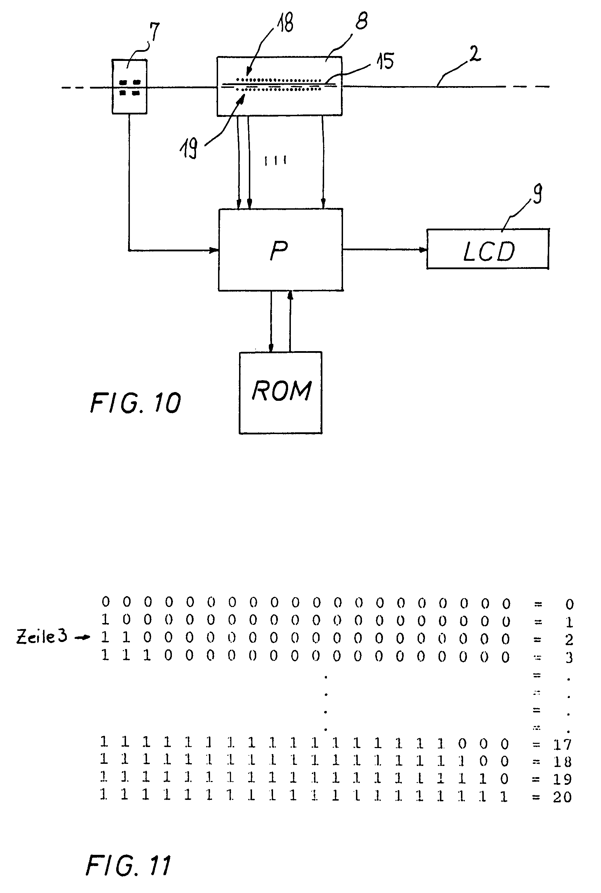

Eine Lichtschranke 7 sowie eine Anordnung mit mehreren in einer Einrichtung 8 angeordneten Fotodektoren sind mit einer in Figur 10 dargestellten Meßeinrichtung verbunden, die aus den von Lichtschranke 7 und Einrichtung 8 abgegebenen Signalen die Bewegungsrichtung des Lochbandes 2 und die Wegstrecke s ermittelt. Die elektronische Meßeinrichtung addiert die Wegstrecke s zu der bekannten Länge des Grundgehäuses 6 hinzu und zeigt das daraus sich ergebende Meßergebnis an einer LCD-Anzeigeneinrichtung 9 an.

In Figur 2 ist die Draufsicht des Teleskopmeßstabes von Figur 1 dargestellt. Das Verlängerungsteil 4 ist hier vollständig in das Grundgehäuse 6 eingeschoben, so daß seine Anschlagplatte 10 an diesem anliegt.

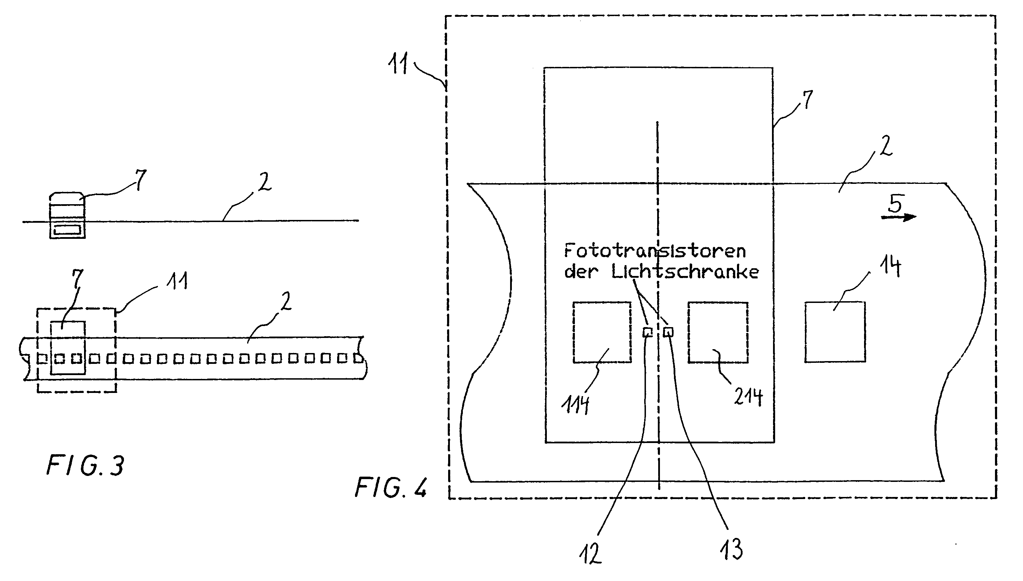

In Figur 3 zeigt die obere Darstelung die prinzipielle Anordnung der Lichtschranke 7 und das an ihr hindurchgeführte Lochband 2 von der Seite. Die darunter befindliche Darstellung zeigt die Draufsicht auf das Lochband 2 und die Position der Lichtschranke 7.

In Figur 4 ist ein in Figur 3 gekennzeichneter Ausschnitt 11 vergrößert dargestellt. Die Lichtschranke 7 besitzt 2 Fototransistoren 12, 13, die mit hier nicht dargestellten gegenüberliegenden lichtemittierenden Dioden oder dergleichen eine sogenannte Gabellichtschranke bilden. Mit dieser Lichtschranke läßt sich die Bewegungsrichtung des Lochbandes 2 und die Anzahl der an der Lichtschranke vorbeigeführten Löcher 14 ermitteln. Wird das Lochband 2 in Pfeilrichtung 5 bewegt, wird das Loch 114 zuerst in den Wirkungsbereich des Fototransistors 12 und danach in den Wirkungsbereich des Fototransistors 13 kommen. Die Fototransistoren 12, 13 werden somit in zeitlichem Abstand und in der genannten Reihenfolge elektrische Signale abgeben, woraus sich die Bewegungsrichtung des Lochbandes 2 eindeutig bestimmen läßt. Bei einer Verschiebung des Lochbandes 2 entgegengesetzt zur Bewegungsrichtung 5 wird zuerst der Fototransistor 13 und dann der Fototransistor 12 ein Signal abgeben, sobald das Loch 214 in den Wirkungsbereich der jeweiligen Transistoren kommt.

Die Lichtschranke 7 zählt mittels der Fototransistoren 12, 13 die an diesen vorbeikommenden Löcher 14, 214, 114, woraus die mit der Lichtschranke 7 verbundene elektronische Meßanordnung die Anzahl der Löcher und daraus die Wegstrecke ermittelt, welche das Lochband 2 zurückgelegt hat. Eine derartige Anordnung, bestehend aus Lochband 2 und Lichtschranke 7 zur Bestimmung der Wegstrecke des an der Lichtschranke 7 vorbeigeführten Lochbandes 2 ist ansich bekannt.

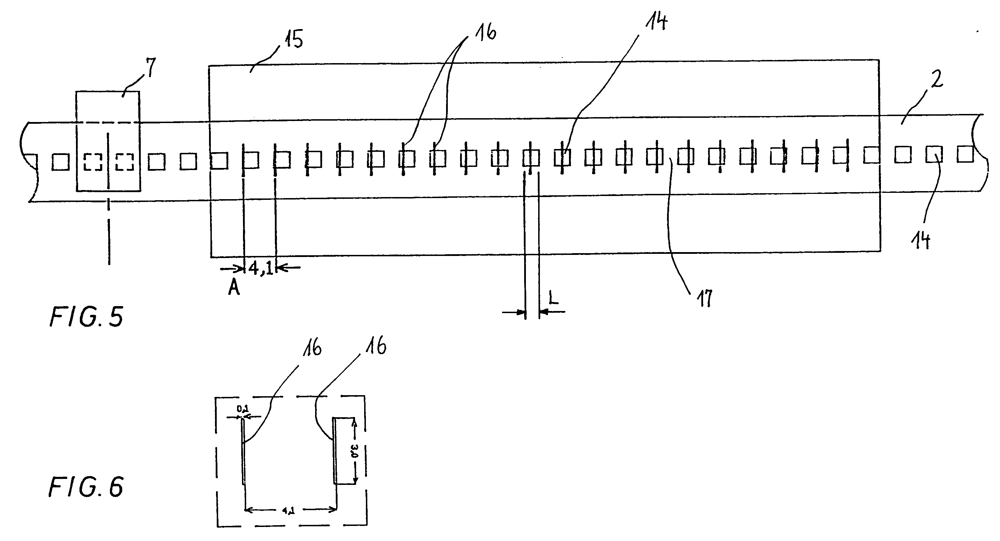

Der erfindungsgemäße elektronische Teleskopmeßstab besitzt außer einer ansich bekannten Lichtschranke 7 zusätzlich eine Nonius-Schlitzblende 15, wie diese in Figur 5 dargestellt ist. die Nonius-Schlitzblende 15 ist im Bereich der Einrichtung 8 gemäß Figur 1 angeordnet und überdeckt das Lochband 2 über einen mehrere Löcher 14 umfassenden Bandabschnitt.

In der dargestellten Nonius-Schlitzblende 15 sind 20 Schlitze 16 ausgespart, deren Schlitzbreite 1/20 der Länge L eines Loches 14 beträgt. Der Abstand A zweier Schlitze genügt der Gleichung

$$A = L/N + 2L,$$

wobei L die Länge eines Loches 14 und N die Anzahl der Schlitze 16 auf der Nonius-Schlitzblende 15 ist. Die Schlitzbreite SB genügt der Gleichung

$$SB = L/N.$$

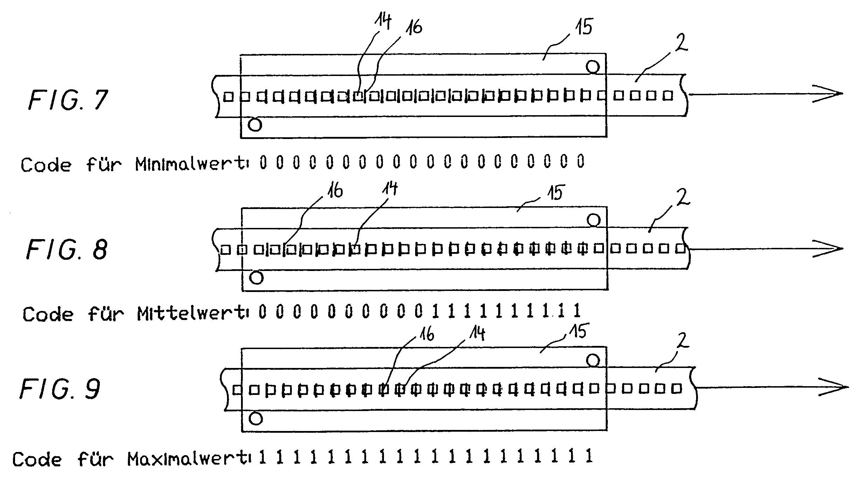

Bei dem in Figur 5 und Figur 6 vergrößert dargestellten Ausführungsbeispiel betrage die Länge eines Loches 14 L = 2 mm. Der zwischen den Löchern 14 befindliche Steg 17 hat exakt die gleiche Länge L = 2 mm. Daraus erhält man einen Schlitzabstand A = 4,1 mm, wobei die Schlitzbreite SB = 0,1 mm beträgt. Diese Maße sind den Figuren 5 und 6 zu entnehmen. Die Schlitze 16 erstrecken sich deutlich über den oberen und unteren Rand der Löcher 14.

In den Figuren 7 bis 9 sind unterschiedliche Positionen für das Lochband 2 dargestellt. Die Position gemäß Figur 7 ist so gewählt, daß keiner der Schlitze 16 im Bereich eines Loches 14 liegt. Zur elektronischen Überwachung der Schlitze 16 sind jedem Schlitz ein Fotodetektor zugeordnet, d.h. im dargestellten Fall gemäß Figur 7 gibt jeder der 20 hier nicht dargestellten Fotodetektoren ein 0-Signal ab. Der Code für den Minimalwert dieser Fotodetektorenanordnung besteht somit aus 20 Nullen.

In Figur 8 ist die Position des Lochbandes 2 dargestellt, bei der sich der angegebene Code für den Mittelwert ergibt.

In Figur 9 ist das Lochband 2 in einer Position, wo sämtliche Löcher 14 sich mit den Schlitzen 16 überlappen, so daß sich der Code für den Maximalwert mit lauter 1-Signalen ergibt.

In Figur 10 ist eine Meßeinrichtung dargestellt, die auch die Einrichtung 8 gemäß Figur 1 enthält. In der Einrichtung 8 verläuft das hier von der Seite sichtbare Lochband 2, über welchem die Nonius-Schlitzblende 15 angeordnet ist. Über der Nonius-Schlitzblende 15 befinden sich insgesamt 20 Fotodetektoren 18, die hier als Punkte dargestellt sind. An der Unterseite des Lochbandes 2 befinden sich lichtemittierende Elemente 19, die ebenfalls hier lediglich als Punkte dargestellt sind. Jedem Fotodetektor 18 ist gegenüberliegend ein lichtemittierendes Element 19 zugeordnet, wobei exakt zwischen 2 gegenüberliegenden Elementen 18, 19 sich ein Schlitz der Nonius-Schlitzblende 15 befindet.

Der Aufbau der Einrichtung 8 ist weiter unten näher erläutert.

Die Fotodetektoren 18 sind mit einem Prozessor P verbunden, der die Signale der Fotodetektoren 18 auswertet. Entsprechend der Anzahl der 1-Signale, die von sämtlichen Fotodetektoren 18 ausgeht, wird vom Prozessor P ein entsprechender Zahlenwert ermittelt. Zu diesem Zweck ist der Prozessor P mit einem Speicher ROM verbunden, in welchem eine Wertetabelle gemäß Figur 11 abgelegt ist.

Wie aus Figur 11 ersichtlich ist, ordnet der Prozessor P bei vorliegen von insgesamt zwei 1-Signalen diesem Zustand den Wert "2" zu. In der Wertetabelle gemäß Figur 11 ist dieser Zustand in der dritten Zeile dargestellt.

In Abhängigkeit vom ermittelten Wert, der im vorliegenden Beispiel zwischen 0 und 20 sein kann, korrigiert der Prozessor P den mittels Lichtschranke 7 gemessenen Meßwert. Im vorliegenden Ausführungsbeispiel mit den Abmessungen, wie sie in den Figuren 5 und 6 dargestellt sind, wird der von der Lichtschranke 7 ermittelte Wert um 0,2 mm korrigiert, in dem zu dem von der Lichtschranke 7 gemessenen Wert 0,2 mm addiert werden. Der ermittelte Wert wird dann an der Anzeige 9 des Teleskopmeßstabes sichtbar gemacht, die als LCD-Anzeige ausgebildet sein kann.

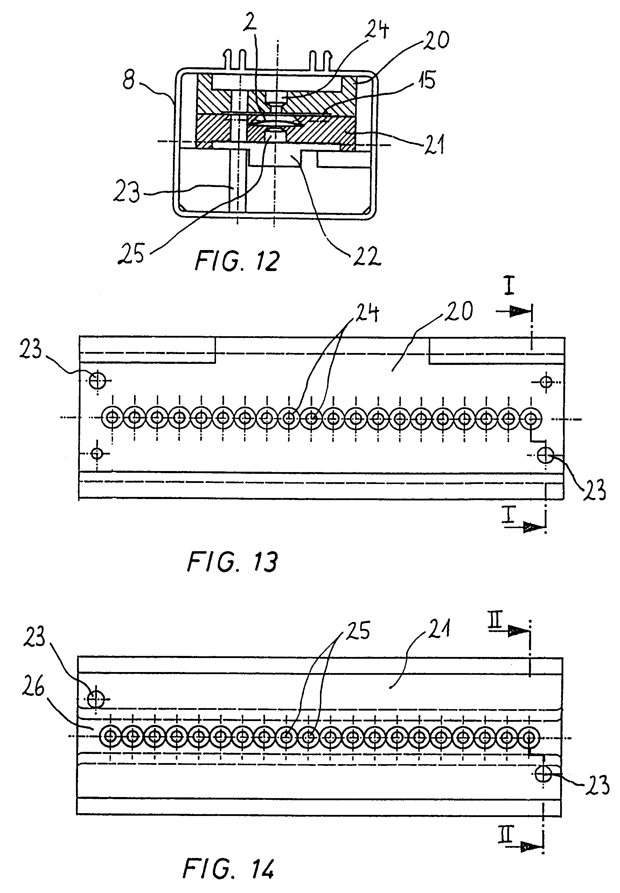

In Figur 12 ist der Querschnitt durch die Einrichtung 8 dargestellt, in der die Nonius-Schlitzblende 15 zwischen zwei Bauteilehaltern 20, 21 aus Kunststoff angeordnet ist. Der untere Bauteilehalter 21 ist auf einem Trägerelement 22 befestigt. Ein Positionierkanal 23 dient zur Einführung eines Positionierstiftes oder dergleichen, um die Bauteilehalter 20, 21 exakt zu positionieren.

Der obere Bauteilehalter 20 ist in Figur 13 in der Draufsicht dargestellt, während der untere Bauteilehalter 21 in Figur 14 in der Draufsicht gezeigt ist.

Der Bauteilehalter 20 besitzt ebenso wie der Bauteilehalter 21 zwanzig Aufnahmebohrungen 24, 25, die zur Aufnahme von elektrooptischen Elementen dienen. Im Bauteilehalter 24 werden Fotodetektoren 18 (Figur 10) angeordnet, während im Bauteilehalter 21 lichtemittierende Elemente 19 (Figur 10) in den Bohrungen 25 gehalten werden.

Der Bauteilehalter 21 besitzt einen Führungskanal 26 für die Aufnahme des Lochbandes 2. Der Führungskanal 26 hat ein Schwalbenschwanzprofil, wodurch das Lochband 2 sehr exakt geführt werden kann.

In den Figuren 13 und 14 sind die Schnittlinien I - I und II - II eingezeichnet, deren Schnittansicht in Figur 12 dargestellt ist.

**Patentansprüche**

1. Elektronischer Teleskopmeßstab in dessen Grundgehäuse (6) ein ausziehbares Verlängerungsteil (4) angeordnet ist, das mit einem eine Vielzahl von in Reihe angeordneter Löcher (14) aufweisenden Lochband (2) verbunden ist, das beim Aus- und Einschieben des Verlängerungsteils (4) die gleiche Wegstrecke zurücklegt, wie das Verlängerungsteil (4), wobei eine im Grundgehäuse (6) fixierte Lichtschranke (7) bei jedem an ihr vorüberkommenden Loch (14) ein Zustandssignal an eine Meßelektronik überträgt, die aus der Anzahl der Zustandssignale die zurückgelegte Wegstrecke des Verlängerungsteils (4) zur Meßwertbestimmung ermittelt, **dadurch gekennzeichnet**, daß eine Nonius-Schlitzblende (15) einen mehrere Löcher (14) umfassenden Bandabschnitt überdeckt; daß die Breite eines Schlitzes (16) in der Nonius-Schlitzblende (15) einen Bruchteil der Länge (L) eines Loches (14) beträgt; daß jedem Schlitz (16) der Nonius-Schlitzblende (15) ein Fotodetektor (18) zugeordnet ist; daß bei Überlagerung eines Schlitzes (16) und eines Loches (14) der dem Schlitz (16) zugeordnete Fotodetektor (18) ein diesen Zustand kennzeichnendes 1-Signal an die Meßelektronik abgibt; und daß die Meßelektronik aus der Anzahl der 1-Signale eine Meßwertpräzisierung vornimmt.

2. Teleskopmeßstab nach Anspruch 1, **dadurch gekennzeichnet**, daß die Löcher (14) und die zwischen zwei benachbarten Löchern (14) befindlichen Stege (17) gleich lang sind, und daß der Abstand A der Schlitze (16) der Gleichung

$$A = L/N + 2L$$

genügt, wobei L die Länge eines Loches (14) und N die Anzahl der Schlitze (16) ist.

3. Teleskopmeßstab nach einem der Ansprüche 1 oder 2, **dadurch gekennzeichnet**, daß bei einer Fensterlänge von 2 mm und einer Steglänge von 2 mm ein Schlitzabstand von 4,1 mm vorgegeben ist, wobei die Schlitzbreite 0,1 mm beträgt und auf der Nonius-Schlitzblende (15) zwanzig Schlitze vorgesehen sind.

4. Teleskopmeßstab nach einem der vorhergehenden Ansprüche, **dadurch gekennzeichnet**, daß das Lochband (2) ein von einer Aufwickelmechanik (1) abziehbares Stahlband und die Schlitzblende (15) ein gerader Metallstreifen aus Nickel ist.

5. Teleskopmeßstab nach einem der vorhergehenden Ansprüche, **dadurch gekennzeichnet**, daß den Fotodetektoren (18) gegenüberliegend im Bereich der Nonius-Schlitzblende (15) jeweils ein lichtemettierendes Element (19) zugeordnet ist, und daß zwischen Fotodetektoren (18) und lichtemittierenden Elementen (19) das Lochband (2) geführt und die Nonius-Schlitzblende (15) angeordnet ist.

6. Teleskopmeßstab nach Anspruch 5, **dadurch gekennzeichnet**, daß die Fotodetektoren (18) und die lichtemittierenden Elemente (19) jeweils in einem Bauteilehalter (20,21) mit hierfür vorgesehenen, in Reihe angordneten Aufnahmebohrungen (24,25) einliegen.

7. Teleskopmeßstab nach Anspruch 6, **dadurch gekennzeichnet,** daß einer der beiden Bauteilehalter (21) einen Führungskanal (26) besitzt, der das Lochband (2) führt.

8. Teleskopmeßstab nach Anspruch 7, **dadurch gekennzeichnet**, daß der Führungskanal (26) schwalbenschwanzförmiges Profil hat.

9. Teleskopmeßstab nach einem der Ansprüche 6 bis 8, **dadurch gekennzeichnet**, daß die beiden Bauteilehalter (20,21) mittels Positioniereinrichtungen (23) in einer vorgegebenen Position fixiert sind, und daß zwischen beiden Bauteilehaltern (20,21) die Nonius-Schlitzblende (15) angeordnet ist.

## Claims

1. Electronic telescopic measuring rod in whose basic housing (6) is located an extendable extension piece (4), which is connected to a perforated band (2) having a plurality of holes (14) in a row and which covers the same path length on extending and inserting the extension piece (4) as the latter, in which a light barrier (7) fixed in the basic housing (6) at each hole (14) coming over it transmits a state signal to a measuring electronics, which determines from the number of state signals the path length covered by the extension piece (4) for measured value determination, characterized in that a vernier slit diaphragm (15) covers a band portion having several holes (14), that the width of a slit (16) in the vernier slit diaphragm (15) is a fraction of the length (L) of a hole (14), that with each slit (16) of the vernier slit diaphragm (15) is associated a photodetector (18), that in the case of the superimposing of a slit (16) and a hole (14) the photodetector (18) associated with the slit (16) emits a 1-signal characterizing this state to the measuring electronics and the latter performs a measured value definition from the number of 1-signals.

2. Telescopic measuring rod according to claim 1, characterized in that the holes (14) and the webs (17) located between two adjacent holes (14) are of the same length and that the spacing A of the slits (16) satisfies the equation

$$A = L/N + 2L$$

in which L is the length of a hole (14) and N the number of slits (16).

3. Telescopic measuring rod according to one of the claims 1 or 2, characterized in that with a window length of 2 mm and a web length of 2 mm a slit spacing of 4.1 mm exists, the slit width being 0.1 mm and there are twenty slits on the vernier slit diaphragm (15).

4. Telescopic measuring rod according to one of the preceding claims, characterized in that the perforated band (2) is a steel band removable form a take-up mechanism (1) and the slit diaphragm (15) is a straight metal strip made from nickel.

5. Telescopic measuring rod according to one of the preceding claims, characterized in that facing the photodetectors (18) in the vicinity of the vernier slit diaphragm (15) is in each case provided a light-emitting element (19) and that between the photodetectors (18) and the light-emitting elements (19) is guided the perforated band (2) and is positioned the vernier slit diaphragm (15).

6. Telescopic measuring rod according to claim 5, characterized in that the photodetectors (18) and the light-emitting elements (19) are in each case placed in a component holder (20, 21) with series-arranged reception bores (24, 25) provided for this purpose.

7. Telescopic measuring rod according to claim 6, characterized in that one of the two component holders (21) has a guide channel (26), which guides the perforated band (2).

8. Telescopic measuring rod according to claim 7, characterized in that the guide channel (26) has a dovetailed profile.

9. Telescopic measuring rod according to one of the claims 6 to 8, characterized in that the two component holders (20, 21) are fixed in a predetermined position between positioning devices (23) and that the vernier slit diaphragm (15) is located between both component holders (20, 21).

**Revendications**

1. Échelle de mesure électronique télescopique, dans le boîtier de base (6) de laquelle est disposé un élément de prolongement (4) pouvant être ressorti et qui est relié à une bande perforée (2) comportant une multiplicité de trous (14) disposés suivant une rangée et qui, lorsqu'on ressort et qu'on rétracte l'élément de prolongement (4), parcourt le même trajet de déplacement que l'élément de prolongement (4), et dans laquelle un relais photoélectrique (7) fixé dans le boîtier de base (6) transmet, par chaque trou (14) passant au-dessus de lui, un signal d'état à un système électronique de mesure, qui, à partir du nombre des signaux d'état, détermine le trajet de déplacement parcouru de l'élément de prolongement (4) pour la détermination d'une valeur de mesure, caractérisée en ce qu'un diaphragme à fentes de vernier (15) recouvre une section de bande englobant plusieurs trous (14); que la largeur d'une fente (16) dans le diaphragme à fentes de vernier (15) est égale à une fraction de la longueur (L) d'un trou (14); qu'un photodétecteur (18) est associé à chaque fente (16) du diaphragme à fentes de vernier (15); que lors de la superposition d'une fente (16) d'un trou (14), le photodétecteur (18) associé à la fente (16) envoie au système électronique de mesure un signal (1) caractérisant cet état; et que le système électronique de mesure exécute une opération de précision sur la valeur de mesure à partir du nombre des signaux 1.

2. Échelle de mesure télescopique selon la revendication 1, caractérisée en ce que les trous (14) et les barrettes (17), qui sont situées entre deux trous voisins (14), ont une même longueur et que la distance A des fentes (16) satisfait à la relation

$$A = L/N + 2L$$

L étant la longueur d'un trou (14) et N le nombre des fentes (16).

3. Échelle de mesure télescopique selon l'une des revendications 1 ou 2, caractérisée en ce que dans le cas d'une longueur de fenêtre de 2 mm et d'une longueur de barrette de 2 mm, une distance de 4,1 mm entre fentes est prédéterminée, la largeur des fentes étant égale à 0,1 mm, tandis que 20 fentes sont prévues sur le diaphragme à fentes de vernier (15).

4. Échelle de mesure télescopique selon l'une des revendications précédentes, caractérisée en ce que la bande perforée (2) est une bande d'acier, qui peut être dévidée d'un mécanisme d'enroulement (1) et que le diaphragme à fentes (15) est une bande métallique rectiligne en nickel.

5. Échelle de mesure télescopique selon l'une des revendications précédentes, caractérisée en ce qu'aux photodétecteurs (18) est associé en vis-à-vis, dans la zone du diaphragme à fentes de vernier (15), un élément photoémissif respectif (19), et que la bande perforée (2) est guidée et le diaphragme à fentes de vernier (15) est disposé entre les photodétecteurs (18) et les éléments photoémissifs (19).

6. Échelle de mesure télescopique selon la revendication 5, caractérisé en ce que les photodétecteurs (18) et les éléments photoémissifs (19) sont disposés respectivement dans un porte-composants (20,21) comportant des perçages de logement (24,25) prévus à cet effet et disposés suivant une rangée.

7. Échelle de mesure télescopique selon la revendication 6, caractérisée en ce que l'un des deux porte-composants (21) possède un canal de guidage (26), qui guide la bande perforée (2).

8. Échelle de mesure télescopique selon la revendication 7, caractérisée en ce que le canal de guidage (26) possède un profil en queue d'aronde.

9. Échelle de mesure télescopique selon l'une des revendications 6 à 8, caractérisée en ce que les deux porte-composants (20,21) sont fixés au moyen de dispositifs de positionnement (23) dans une position prédéterminée, et que le diaphragme à fentes de vernier (15) est disposé entre les deux porte-composants (20,21).

FIG.1

FIG.2

EP 0 541 885 B1

Fototransistoren der Lichtschranke

FIG. 4

FIG. 3

FIG. 5

FIG. 6

EP 0 541 885 B1

EP 0 541 885 B1

*FIG. 7*

Code für Minimalwert: 0 0 0 0 0 0 0 0 0 0 0 0 0 0 0 0 0 0 0 0 0

*FIG. 8*

Code für Mittelwert: 0 0 0 0 0 0 0 0 0 0 1 1 1 1 1 1 1 1 1 1 1

*FIG. 9*

Code für Maximalwert: 1 1 1 1 1 1 1 1 1 1 1 1 1 1 1 1 1 1 1 1 1

FIG. 10

FIG. 11

```
      0 0 0 0 0 0 0 0 0 0 0 0 0 0 0 0 0 0 0 0   =   0
      1 0 0 0 0 0 0 0 0 0 0 0 0 0 0 0 0 0 0 0   =   1
Zeile3 → 1 1 0 0 0 0 0 0 0 0 0 0 0 0 0 0 0 0 0 0   =   2
      1 1 1 0 0 0 0 0 0 0 0 0 0 0 0 0 0 0 0 0   =   3
                            .                   =   .
                            .                   =   .
                            .                   =   .
                            .                   =   .
      1 1 1 1 1 1 1 1 1 1 1 1 1 1 1 1 1 0 0 0   =  17
      1 1 1 1 1 1 1 1 1 1 1 1 1 1 1 1 1 1 0 0   =  18
      1 1 1 1 1 1 1 1 1 1 1 1 1 1 1 1 1 1 1 0   =  19
      1 1 1 1 1 1 1 1 1 1 1 1 1 1 1 1 1 1 1 1   =  20
```

FIG. 12

FIG. 13

FIG. 14